**Europäisches Patentamt**

**European Patent Office**

**Office européen des brevets**

(11) Veröffentlichungsnummer: **0 074 118**
A2

(12) # EUROPÄISCHE PATENTANMELDUNG

(21) Anmeldenummer: **82108265.8**

(22) Anmeldetag: **08.09.82**

(51) Int. Cl.³: **B 60 B 3/06**

(30) Priorität: **08.09.81 DE 3135546**

(43) Veröffentlichungstag der Anmeldung:
**16.03.83 Patentblatt 83/11**

(84) Benannte Vertragsstaaten:
**AT BE CH DE FR GB IT LI LU NL SE**

(71) Anmelder: **Stahlschmidt & Maiworm GmbH & Co.KG**
**In der Lacke**
**D-5980 Werdohl 1(DE)**

(72) Erfinder: **Stahlschmidt, Erich**
**Wiesenfeldstrasse 10**
**D-5974 Herscheid(DE)**

(74) Vertreter: **Seibert, Rudolf, Dipl.-Ing.**
**Tattenbachstrasse 9**
**D-8000 München 22(DE)**

(54) Leichtmetallfelge für Nutzfahrzeuge.

(57) Die Erfindung bezieht sich auf eine Leichtmetallfelge, insbesondere für Nutzfahrzeuge, wie Lastkraftwagen, Omnibusse oder dgl.

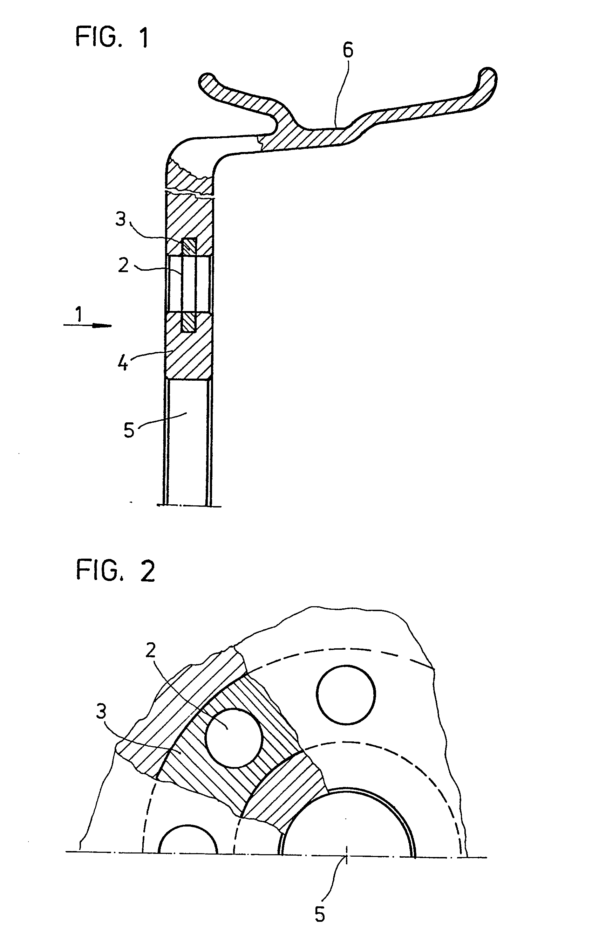

Um der Leichtmetallfelge auch im Bereich der Bohrung für die Anschraubbolzen die notwendige Festigkeit zu geben, wird die Felge in diesem Bereich durch eingegossene Einlagen, vornehmlich in Form eines Stahlringes verstärkt (Fig. 1).

FIG. 1

EP 0 074 118 A2

Leichtmetallfelge für
Nutzfahrzeuge

Die vorliegende Erfindung bezieht sich auf eine Leichtmetallfelge, und zwar insbesondere zur Verwendung an Nutzfahrzeugen, also vornehmlich Lastkraftwagen und Omnibussen.

In Verbindung mit Kraftfahrzeugen werden heute häufig Felgen aus Leichtmetall eingesetzt, um die ungefederte Masse an einem Fahrzeug im Interesse einer guten Bodenhaftung so gering wie nur möglich zu halten. An schweren Nutzfahrzeugen also insbesondere auch Omnibussen und Lastkraftwagen konnten derartige Felgen bislang nicht eingesetzt werden, obwohl auch bei diesen die Vorteile des geringen Radgewichtes im Interesse guter Fahreigenschaften gegeben wären. Ein Einsatz erschien deshalb nicht möglich, weil im Interesse der Sicherheit bei Felgen für Nutzfahrzeuge Querschnitte benötigt würde, die zu einem Radgewicht führen müssen, das praktisch in der Größenordnung von Stahlrädern liegt.

Der vorliegenden Erfindung geht die Erkenntnis voraus, daß jedes Rad im besonderem im Bereich der Bohrung für die Anschraubbolzen besonders gefährdet ist, da einerseits an dieser Stelle die gesamten Beschleunigungs- und Bremskräfte aber auch Querkräfte beim Kurvenfahren usw. aufgenommen werden müssen, andererseits aber wegen der Mehrzahl von Bohrungen durch die Querschnittsverminderung eine Schwachstelle gegeben ist.

Durch die DE-OS 22 07 771 ist es für übliche Fahrzeugräder bekannt geworden, im Bereich der Aufnahmebohrungen für die Schrauben zur Verstärkung Stahlbüchsen vorzusehen, z.B. einzupressen. Dadurch wird zwar der Flächendruck der Schraubenmuttern besser aufgenommen und Verformungen durch den Flächendruck in diesem Bereich werden vermieden. Jedoch ist eine solche Ausgestaltung nicht geeignet, große Radial- oder Tagentialkräfte aufzunehmen.

Der Erfindung liegt die Aufgabe zugrunde, den Aufbau einer Leichtmetallfelge anzugeben, die in ihrer Gesamtheit aus Leichtmetall gefertigt ist und die eine Festigkeit aufweist, die auch für die Übertragung extremer Beschleunigungs- und Bremskräfte zwischen Fahrzeug und Straße geeignet ist.

Die vorgenannte Aufgabe wird mit einer Leichtmetallfelge mit den Merkmalen des Patentanspruches 1 gelöst. Vorteilhafte Ausgestaltungen von gemäß diesen Merkmalen aufgebauten Leichtmetallfelgen ergeben sich aus den Unteransprüchen.

Gemäß der Erfindung wird also eine Leichtmetallfelge für Lastkraftwagen oder dgl. mit einer eingegossenen ringförmigen Einlage beispielsweise in Form eines geschlossenen Stahlringes im Bereich der Bohrungen für die Radschrauben versehen, wobei die Einlage aus einem Material besteht, das gegenüber dem verwendeten Leichtmetall eine erhöhte Festigkeit aufweist. Hierfür kommt insbesondere eine Einlage aus Stahl in Frage. Um eine gute Verbindung zwischen Gußteil und eingegossenem Stahlring zu garantieren, kann dabei der Ring an seinen Begrenzungsflächen zum Leichtmetall gekerbt, gekröpft oder auch hinterschnitten ausgebildet werden.

Außerdem ist es gemäß einer anderen Weiterbildung des Erfindungsgedankens im Interesse einer guten Verbindung nach dem Vergießen vorteilhaft die Grenzflächen zu beschichten, beispielsweise mit einer aufgespritzten Aluminiumschicht.

Durch diese Maßnahmen wird eine erhöhte Festigkeit an der Leichtmetallfelge in dem Bereich erreicht, an welchem diese durch die zahlreichen Anschraubbohrungen besonders geschwächt ist. Diese erhöhte Festigkeit erlaubt dann den Einsatz von gegossenen Leichtmetallfelgen auch für Omnibusse oder ähnliche besonders hochwertige Nutzfahrzeuge.

Einzelheiten einer Leichtmetallfelge nach der Erfindung und vorteilhafte Ausgestaltungen derartiger Leichtmetallfelgen werden im folgenden in Verbindung mit den Zeichnungen erläutert.

In diesen Zeichnungen zeigen:

Fig. 1    eine Teilschnittdarstellung einer Felge gemäß der Erfindung mit einem Verstärkungsring,

Fig. 2    eine auszugsweise Draufsicht in teilweise aufgebrochener Darstellung zu einer Ausführungsform nach Fig. 1,

Fig. 3    einen Verstärkungsring für eine Leichtmetallfelge gemäß der Erfindung in Draufsicht,

Fig. 4          einen Teilabschnitt eines Verstärkungsringes
                in einer anderen Ausführungsform,

Fig. 5          eine Schnittdarstellung durch einen Verstärkungsring nach Fig. 3 in einer möglichen
                Ausführung,

Fig. 6          eine Schnittdarstellung in einer anderen
                Ausführungsform,

Fig. 7          einen Verstärkungsring mit Verstärkungshülsen als Baueinheit in einer Teilschnitt-
                darstellung und

Fig. 8          eine Schnittdarstellung gemäß der Linie VIII-
                VIII  in einer Ausführungsform nach Fig.
                7.

Da die einzelnen Zeichnungen jeweils nur charakteristische
Ausschnitte von Einzelheiten einer Radfelge zeigen,
wird ausdrücklich darauf hingewiesen, daß gleiche Bezugszeichen jeweils gleiche Funktionsteile bezeichnen,
um die räumliche Zuordnung der einzelnen Teile zu erleichtern.

In Fig. 1 ist in einer Schnittdarstellung auszugsweise
die Hälfte einer Leichtmetallfelge wiedergegeben, wobei
für die folgenden Überlegungen die pauschal mit 1 bezeichnete Radschüssel von besonderer Bedeutung ist.
Diese Radschüssel 1 einer Leichtmetallfelge weist -
insgesamt acht - Bohrungen 2 auf, durch die die Anschraubbolzen für die Befestigung der Felge an der
Radachse hindurchgreifen und auf denen dann in an sich
bekannter Weise die Felge mit Radmuttern befestigt
wird. Dabei greift die Radnabe durch die Ausnehmung
5 hindurch.

Gemäß dem Vorschlag nach der Erfindung ist bei der
Ausführungsform nach Fig. 1 im Bereich der einzelnen
Anschraubbolzendurchführungen 2 ein Stahlring 3 vorgesehen, den die Bohrungen 2 entsprechend durchdringen. Der Ring aus Stahl oder einem ähnlich festen Material ist dabei in die im übrigen aus Leichtmetall vorzugsweise gegossene Radschüssel 4 eingebettet.

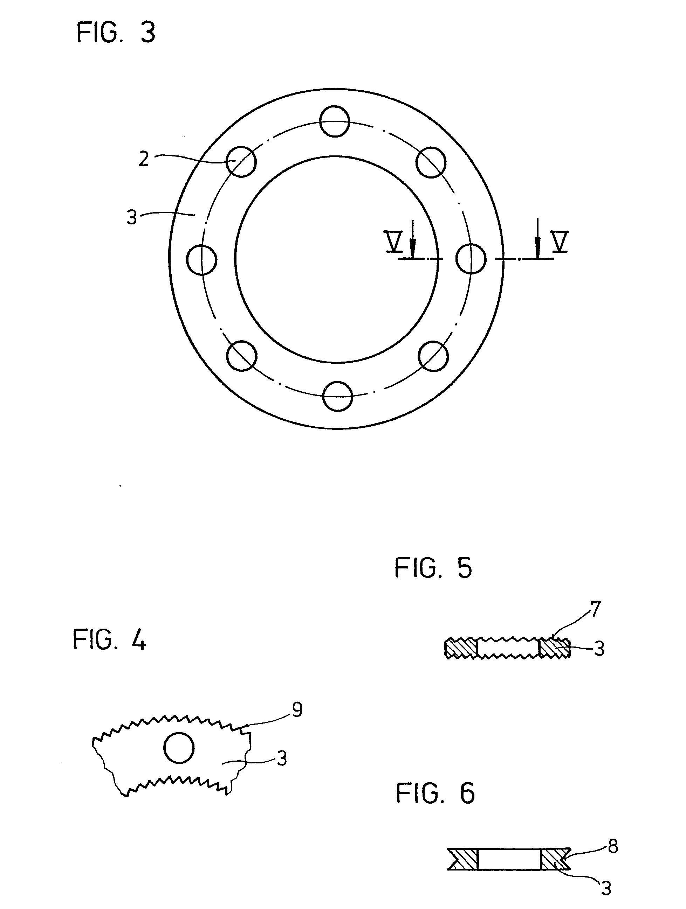

Aufbau und Anordnung des Ringes 3 mit den Anschraubbohrungen 2 ergibt sich unmittelbar aus Fig. 2 in Verbindung mit Fig. 3.

Die Radschüssel geht in an sich bekannter Weise in einen Felgenring 6 über (Fig. 1).

Die Fig. 3 zeigt dabei den Verstärkungsring 3 mit den acht Bohrungen 2, wie er in einer Leichtmetallfelge gemäß der Erfindung eingegossen werden soll.

Um eine gute Haftung und insbesondere auch eine extrem gute Übertragung von Radialkräften von den Anschraubbolzen über den Ring 3 auf die Leichtmetallfelge zu garantieren, kann es sich empfehlen, den Stirnrand des Ringes ungleichmäßig, z.B. nach Art eines Zahnrades auszubilden. Dies ist in der Fig. 4 anschaulich dargestellt, wobei die Randbereiche mit Zähnen 9 versehen sind.

Weiter empfiehlt es sich für eine einwandfreie Verbindung zwischen Stahlring 3 eineseits und Aluminiumguß 4 andererseits die Oberfläche in Berührungsbereich uneben auszubilden, wie es in Fig. 5 dargestellt ist, wobei die Unebenheit mit 7 bezeichnet ist. An Stelle der Unebenheiten, die sich sowohl in radialer Richtung als auch in konzentrischen Kreisen auf dem Ring befinden können, kann der Versteifungsring 3 auch mit einer Beschichtung versehen werden, die eine besonders innige Verbindung mit dem zu gießenden Aluminium garantiert.

6

Im besonderen ist für die Beschichtung eine aufgespritzte Aluminiumschicht geeignet, die sich beim Vergießen unmittelbar mit dem heißen fließenden Aluminium verbindet.

Zur Aufnahme von Axialkräften, die insbesondere beim Kurvenfahren des Fahrzeuges auftreten können, wird gemäß einer anderen Weiterbildung des Erfindungsgedankens vorgeschlagen, mindestens eine der Stirnflächen des Verstärkungsringes mit einer Kerbe zu versehen, wie dies beispielsweise in Fig. 6 dargestellt ist. Die Kerbe ist dort mit 8 bezeichnet.

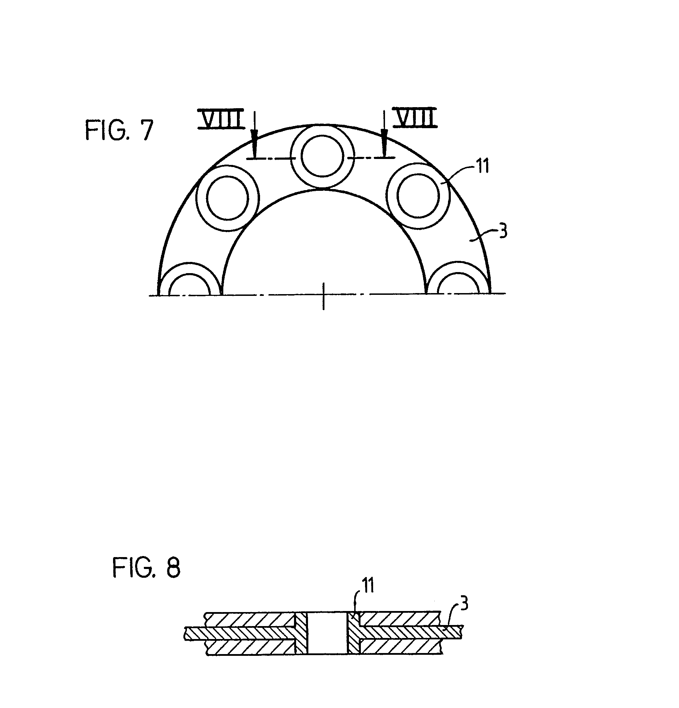

In den Fign. 7 und 8 ist anschaulich gezeigt, daß es vorteilhaft sein kann, auf den Stahlring 3 im Bereich der Durchtrittsöffnungen für die Anschraubbolzen Manschetten 11 aufzusetzen, so daß die Durchtrittsöffnung für die Radschrauben gestaltet sind, wie wenn in die Radschüssel Stahlbuchsen vorhaden wären. In einer derartigen Ausführungsform werden die Beschleunigungs- und Bremskräfte voll von den Stirnkanten der Manschette 11 auf die Leichtmetallfelge übertragen, während alle Radial- und Tangentialkräfte voll von dem Stahlring 3 aufgefangen werden.

Zur Erläuterung zeigt dabei die Fig. 7 in Draufsicht die Hälfte eines entsprechenden Verstärkungsringes, während die Fig. 8 den Schnitt durch eine einzige Bohrung abschnittsweise wiedergibt, und zwar gemäß der gestrichelten Linie VIII-VIII.

Auch bei dem Eingießen von Stahlbuchsen kann, wie vorstehend erläutert, die Verbindung zwischen dem gegossenen Aluminium und den Manschetten 11 durch einen aufgespritzten Aluminiumüberzug oder eine ähnliche Beschichtung zusätzlich verbessert werden.

Die Erfindung wurde anhand verschiedener Realisierungsmöglichkeiten erläutert, wobei diese die Ausführungsmöglichkeiten und Anwendungsmöglichkeiten keineswegs erschöpfen. So sind durchaus die verschiedensten Kombinationen der erläuterten Formen und Oberflächengestaltungen, beispielsweise eine Ausführungsform nach den Fign. 4,5 oder 6 in Kombination mit den Ausführungsformen nach den anderen Fign. möglich.

Die Erfindung ist auch nicht etwa auf Leichtmetallräder aus einem Aluminiumguß beschränkt. Vielmehr kann die Erfindung auch bei Rädern mit einer Radschüssel aus Magnesium oder einem anderen Leichtmetall in gleicher Weise realisiert werden. Dabei können sowohl Verstärkungsring als auch Buchse für die Befestigungsbolzen in deren konstruktiven Aufbau in verschiedenster Weise realisiert werden. In jedem Fall empfiehlt es sich, die einzugießenden Stahlteile mit Oberflächenunebenheiten oder Hinterschneidungen zu versehen, damit eine einwandfreie kraftschlüssige Verbindung garantiert ist.

In besonderen Fällen kann es sich empfehlen, zwischen Verstärkungsring bzw. Buchse aus Stahl und Aluminiumguß eine nachgiebige Schicht, z.B. auch aus Blei, einzufügen, um unterschiedliche Temperaturausdehnungen zu kompensieren. Die hierfür notwendigen Dicken sind so gering, daß das Mehrgewicht bei einer Felge durchaus in Kauf genommen werden kann.

**0074118**

PATENTANSPRÜCHE

1. Leichtmetallfelge, insbesondere für Nutzfahrzeuge (Lkw) mit einer Verstärkung im Bereich der Anschraub-Bohrungen für die Felge, dadurch gekennzeichnet, daß im Bereich der Bohrungen (2) für die Radschrauben ein Verstärkungsring (3) aus einem Material erhöhter Festigkeit eingegossen ist, durch welchen die Radschrauben geführt sind.

2. Leichtmetallfelge nach Anspruch 1, dadurch gekennzeichnet, daß ein mit Bohrungen (2) für die Radschrauben versehener Ring (3) aus Stahl eingegossen ist.

3. Leichtmetallfelge nach Anspruch 1 oder 2, dadurch gekennzeichnet, daß die Oberfläche des Ringes (3) beschichtet ist.

4. Leichtmetallfelge nach Anspruch 3, dadurch gekennzeichnet, daß die Oberfläche mit einer aufgespritzten Aluminiumschicht versehen ist.

5. Leichtmetallfelge nach einem der Ansprüche 1 bis 4, dadurch gekennzeichnet, daß mindestens eine der Stirnflächen zumindest abschnittsweise eingekerbt ist (Fig. 6).

6. Leichtmetallfelge nach einem der Ansprüche 1 bis 5, dadurch gekennzeichnet, daß der Verstärkungsring (3) im Bereich der Bohrung (2) mit aufgesetzten Buchsen (11) ist.

FIG. 1

6

3

2

1

4

5

FIG. 2

2

3

5

FIG. 3

FIG. 5

FIG. 4

FIG. 6

FIG. 7

FIG. 8